# EUROPEAN PATENT APPLICATION

(11) **EP 2 602 038 A1**
(43) Date of publication of application: **12.06.2013**
(21) Application number: 11814047.4
(22) Date of filing: 10.05.2011
(51) Int. Cl.: B23C 3/00, B23K 37/00

(54) **NUMERICAL CONTROL MILLING MACHINE FOR LONG RAIL TO REMOVE POSTWELDING NODULES**

(30) Priority: 06.08.2010 CN 201020285049 U
(71) Applicant: Wuhan Leaddo Measuring&Control Co., Ltd, Wuhan, Hubei 430070 (CN)
(72) Inventor: JIANG, Huisheng, Wuhan Hubei 430070 (CN); ZHANG, Baojun, Wuhan Hubei 430070 (CN); FANG, Kaihui, Wuhan Hubei 430070 (CN); LI, Qinjian, Wuhan Hubei 430070 (CN)
(74) Representative: Zeuner Summerer Stütz
(86) International application number: PCT/CN2011/073889
(87) International publication number: WO 2012/016464

(57) **Abstract**

A numerical control milling machine for a long rail to remove postwelding nodules is disclosed. The numerical control milling machine comprises a platform vehicle (1) installed on an operational foundation rail (11). The platform vehicle (1) is installed with a columnar sliding table (3), a lower sliding table (4), a hydraulic station (5), an electronic control system (6), a detection device (7), a positioning clamp (8), a lubrication system (9) and a chip device (10). The columnar sliding table (3) is mounted with milling devices (2). Control circuits of the columnar sliding table (3), the lower sliding table (4), the detection device (7), the positioning clamp (8), and the lubrication system (9) are connected with the electronic control system (6). The milling devices (2) include a left milling head (2.1) and a right milling head (2.2), and ends of the left milling head (2.1) and the right milling head (2.2) are respectively mounted with cutters (2.3). The numerical control milling machine can solve the problem of manufacturing long rail, and the structure of the manufactured long rail can meet the requirements of processing quality, speed and appearance.

## Description

### FIELD OF THE INVENTION

The invention relates to a numerically controlled milling machine, and more particularly to a numerically controlled rail milling machine for removing nodules from a rail after welding.

### BACKGROUND OF THE INVENTION

A rail after welding always includes annular nodules with a size of 2 mm x 20 mm, and a typical method for removing the nodules from the rail is manual milling. Not only does the manual method have a low speed, necessitate strong labor intensity, and result in pollution; but also the quality of the rail can not be assured. Some nodules supposed to be removed still remains, others are excessively milled; furthermore, disordered milling traces remains on the rail, thereby affecting the appearance and the further exportation of the rail.

### SUMMARY OF THE INVENTION

In view of the above-described problems, it is one objective of the invention to provide a numerically controlled rail milling machine that is advantageous in its fast process speed, good qualification, pollution-free, and beautiful appearance.

To achieve the above objectives, in accordance with one embodiment of the invention, there is provided a numerically controlled rail milling machine, comprising: a manipulatable rail base; a flat car; a milling device, the milling device comprising: a left milling head, a right milling head, and a cutter; a first slide; a second slide; a hydraulic station; an electric control system; a detection device; a positioning clamp, a lubrication system; and a receiving device. The flat car is disposed on the manipulatable rail base. The first slide, the second slide, the hydraulic station; the electric control system, the detection device, the positioning clamp, the lubrication system, and the receiving device are disposed on the flat car. Control circuits of the first slide, the second slide, the detection device, the positioning clamp, and the lubrication system are connected to the electric control system. The milling device is disposed on the first slide. The cutter is disposed on an end of the left milling head and an end of the right milling head.

The cutter is a corn cob cutter, and a diameter of the corn cob cutter matches a diameter of a nodule disposed on a rail to be milled.

The cutter comprises two ends; a milling wheel is disposed on each end; and a diameter of the milling wheel is larger than a diameter of the cutter.

The positioning clamp comprises: an upper fixed block, a lower clamping block, a left clamping block, and a right clamping block. The lower clamping block is downwardly and upwardly movable. The upper fixed block and the lower clamping block are arranged above and beneath a rail to be milled, respectively. The left clamping block and the right clamping block are arranged on two sides of an upper end of the rail to be milled. Control circuits of the upper fixed block, the lower clamping block, the left clamping block, and the right clamping block are connected to the electric control system.

The detection device comprises: a left auxiliary measuring block, and a right auxiliary measuring block. The left auxiliary measuring block and the right auxiliary measuring block are disposed on two sides of a lower end of a rail to be milled. Control circuits of the left auxiliary measuring block and the right auxiliary measuring block are connected to the electric control system.

The invention employs a specialized rail milling device on a numerically controlled machine, accurately controls the milling process of the milling device by the electric control system, thereby shortening the processing time, improving the milling quality of the rail, reducing the labor intensity, and lowering the environmental pollution.

Compared with the prior art, the present invention is advantageous in its fast process speed, good qualification, pollution-free, and beautiful appearance.

### BRIEF DESCRIPTION OF THE DRAWINGS

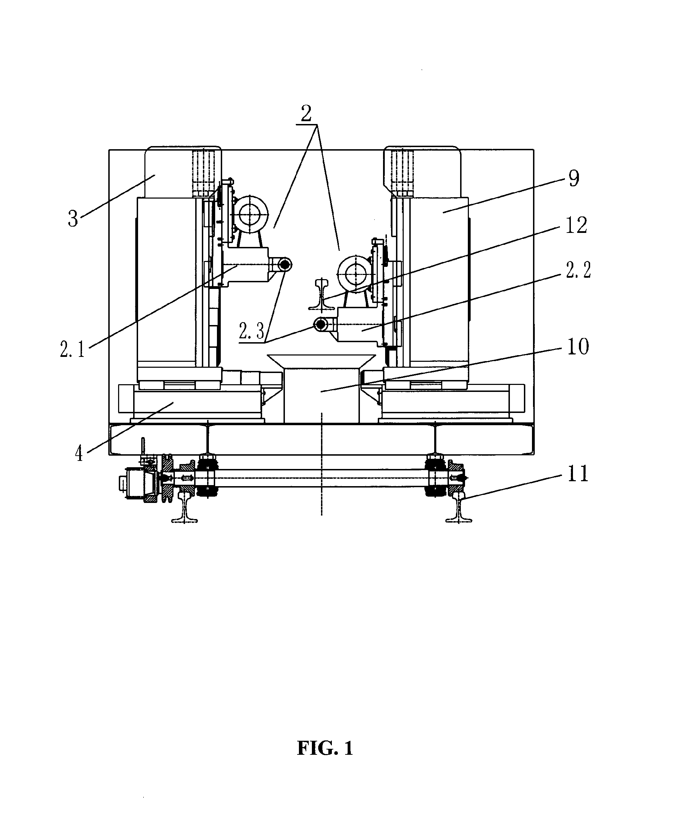

FIG. **1** is a structure diagram of a numerically controlled rail milling machine of the invention;

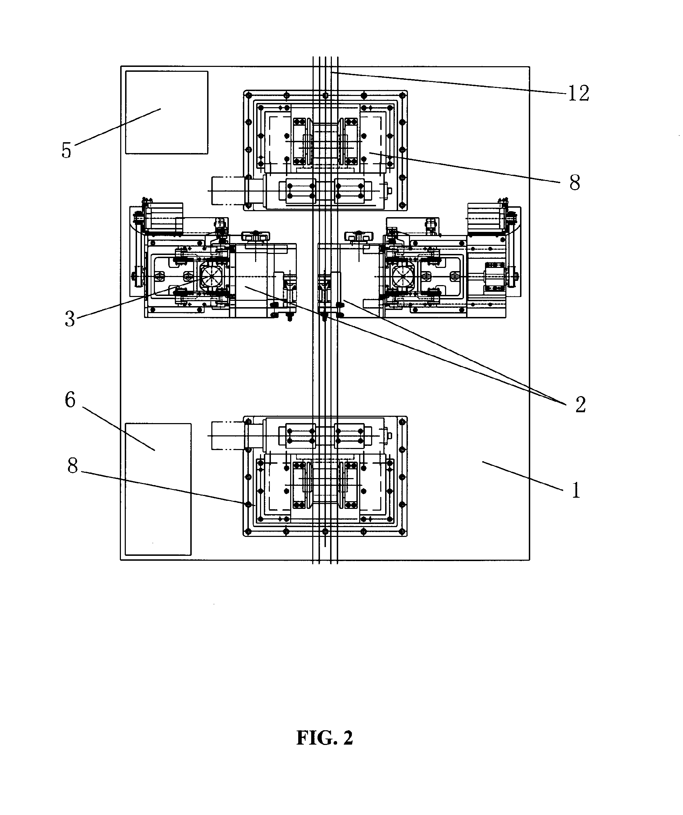

FIG. **2** is a top view of FIG. **1****;**

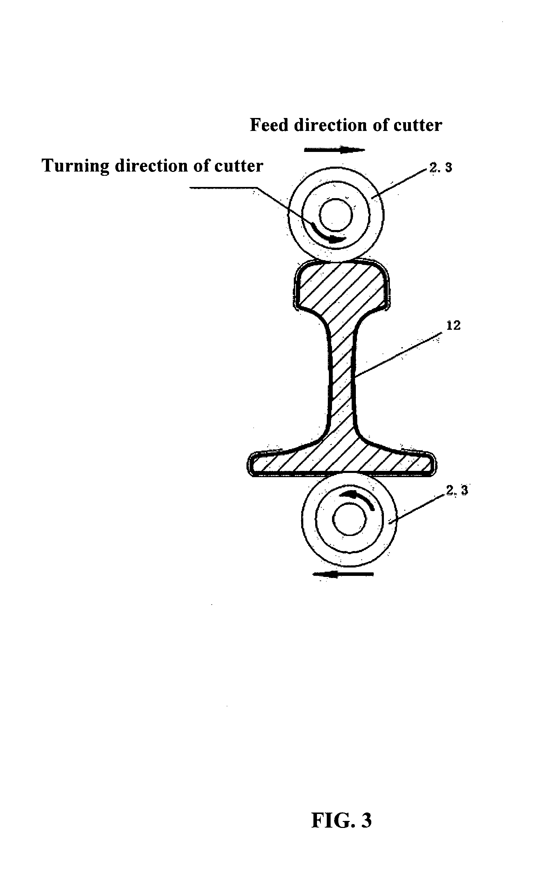

FIG. **3** is a structure diagram of cutters and a rail to be milled during a milling process; and

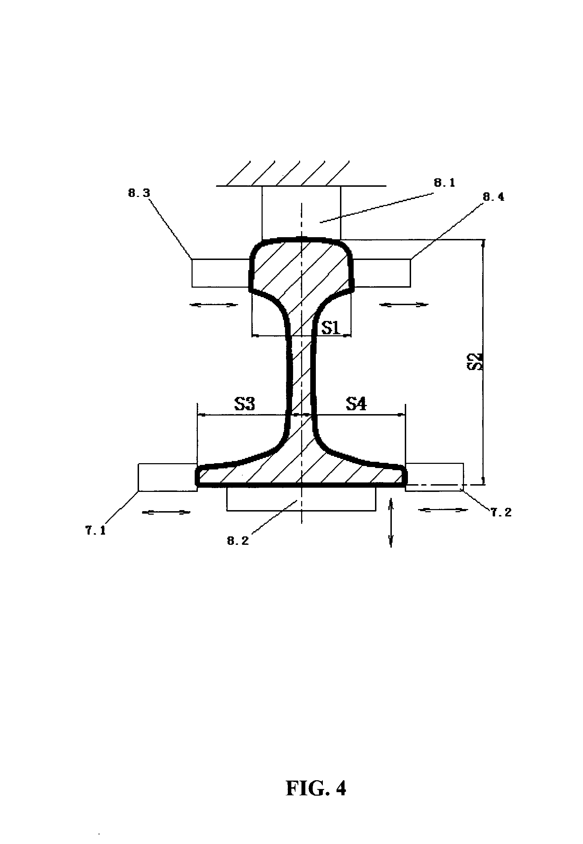

FIG. **4** is a structure diagram of a rail to be milled during a detection process.

In the drawings, the following reference numbers are used: **1.** Flat car; **2.** Milling device; **2.1.** Left milling head; **2.2.** Right milling head; **2.3.** Cutter; **3.** First slide; **4.** Second slide; **5.** Hydraulic station; **6.** Electric control system; **7.** Detection device; **7.1.** Left auxiliary measuring block; **7.2.** Right auxiliary measuring block; **8.** Positioning clamp; **8.1.** Upper fixed block; **8.2.** Lower clamping block; **8.3.** Left clamping block; **8.4.** Right clamping block; **9.** Lubrication system; **10.** Receiving device; **11.** Manipulatable rail base; and **12.** Rail to be milled.

### DETAILED DESCRIPTION OF THE EMBODIMENTS

To further illustrate the invention, experiments detailing a numerically controlled rail milling machine are described below. It should be noted that the following examples are intended to describe and not to limit the invention.

A numerically controlled rail milling machine, comprises: a manipulatable rail base **11;** a flat car **1;** a milling device **2,** the milling device **2** comprising: a left milling head **2.1,** a right milling head **2.2,** and a cutter **2.3;** a first slide **3;** a second slide **4;** a hydraulic station **5;** an electric control system **6;** a detection device **7;** a positioning clamp **8,** a lubrication system **9;** and a receiving device **10.** The flat car **1** is disposed on the manipulatable rail base **11.** The first slide **3,** the second slide **4,** the hydraulic station **5;** the electric control system **6,** the detection device **7,** the positioning clamp **8,** the lubrication system **9,** and the receiving device **10** are disposed on the flat car **1.** Control circuits of the first slide **3,** the second slide **4,** the detection device **7,** the positioning clamp **8,** and the lubrication system **9** are connected to the electric control system **6.** The milling device **2** is disposed on the first slide **3.** The cutter **2.3** is disposed on an end of the left milling head **2.1** and an end of the right milling head **2.2.** The cutter **2.3** is a corn cob cutter, and a diameter of the corn cob cutter matches a diameter of a nodule disposed on a rail **12** to be milled. The cutter **2.3** comprises two ends; a milling wheel is disposed on each end; and a diameter of the milling wheel is larger than a diameter of the cutter **2.3** for one finishing allowance.

The positioning clamp **8** comprises: an upper fixed block **8.1,** a lower clamping block **8.2,** a left clamping block **8.3,** and a right clamping block **8.4.** The lower clamping block **8.2** is downwardly and upwardly movable. The upper fixed block **8.1** and the lower clamping block **8.2** are arranged above and beneath a rail to be milled **12,** respectively. The left clamping block **8.3** and the right clamping block **8.4** are arranged on two sides of an upper end of the rail to be milled **12.** Control circuits of the upper fixed block **8.1,** the lower clamping block **8.2,** the left clamping block **8.3,** and the right clamping block **8.4** are connected to the electric control system **6.**

The detection device **7** comprises: a left auxiliary measuring block **7.1,** and a right auxiliary measuring block **7.2.** The left auxiliary measuring block **7.1** and the right auxiliary measuring block **7.2** are disposed on two sides of a lower end of a rail to be milled **12.** Control circuits of the left auxiliary measuring block **7.1** and the right auxiliary measuring block **7.2** are connected to the electric control system **6.**

When the numerically controlled rail milling machine works, firstly transport a rail to be milled **12** after welding to the flat car **1.** Then, make the left milling head **2.1** and the right milling head **2.2** as references, and horizontally move the cutter **2.3** to a position of a nodule on the rail to be milled **12.** After aligning the rail with the references, start the lower clamping block **8.2** of the positioning clamp **8** to lift the rail to be milled **12** to a position of the upper fixed block **8.1,** and automatically measure a length **S2.** After that, the left clamping block **8.3** and the right clamping block **8.4** fasten the upper end of the rail to be milled **12,** and measure a length **S1.** Thereafter, the left auxiliary measuring block **7.1** and the right auxiliary measuring block **7.2** of the detection device **7** measure a length **S3** and a length **S4,** respectively; the measuring is carried out after the hydraulic system improving the pressing force to a stable state, and the displacement value can be determined by an electronic ruler. Analyze the data from the measurements, determine the format of the rail to be milled **12,** and send out corresponding information of the processing path by the electric control system **6** in compliance with the format of the rail to be milled **12.** Finally, the lifting device, i. e., the first slide **3,** and the horizontally moving device, i. e., the second slide **4** carry out the information of the processing path, control the left milling head **2.1** and the right milling head **2.2** to start the cutter **2.3** to process the rail to be milled **12** according to the preset processing path.

The whole processing duration is three minutes. The steel remains removed in the milling process are collected by the receiving device **10.** In the process, the lubrication system **9** is used to lubricate the cutter **2.3** when necessary to assure a better processing effect.

## Claims

1. A numerically controlled rail milling machine, comprising:
a) a manipulatable rail base (11);
b) a flat car (1);
c) a milling device (2), the milling device (2) comprising: a left milling head (2.1), a right milling head (2.2), and a cutter (2.3);
d) a first slide (3);
e) a second slide (4);
f) a hydraulic station (5);
g) an electric control system (6);
h) a detection device (7);
i) a positioning clamp (8),
j) a lubrication system (9); and
k) a receiving device (10);
**characterized in that**
the flat car (1) is disposed on the manipulatable rail base (11);
the first slide (3), the second slide (4), the hydraulic station (5), the electric control system (6), the detection device (7), the positioning clamp (8), the lubrication system (9), and the receiving device (10) are disposed on the flat car (1);
control circuits of the first slide (3), the second slide (4), the detection device (7), the positioning clamp (8), and the lubrication system (9) are connected to the electric control system (6);
the milling device (2) is disposed on the first slide (3); and
the cutter (2.3) is disposed on an end of the left milling head (2.1) and an end of the right milling head (2.2).

2. The numerically controlled rail milling machine of claim 1, **characterized in that** the cutter (2.3) is a corn cob cutter, and a diameter of the corn cob cutter matches a diameter of a nodule disposed on a rail (12) to be milled.

3. The numerically controlled rail milling machine of claim 1 or 2, **characterized in that** the cutter (2.3) comprises two ends; a milling wheel is disposed on each end; and a diameter of the milling wheel is larger than a diameter of the cutter (2.3).

4. The numerically controlled rail milling machine of claim 1, **characterized in that**
the positioning clamp (8) comprises: an upper fixed block (8.1), a lower clamping block (8.2), a left clamping block (8.3), and a right clamping block (8.4);
the lower clamping block (8.2) is downwardly and upwardly movable;
the upper fixed block (8.1) and the lower clamping block (8.2) are arranged above and beneath a rail to be milled (12), respectively;
the left clamping block (8.3) and the right clamping block (8.4) are arranged on two sides of an upper end of the rail to be milled (12); and
control circuits of the upper fixed block (8.1), the lower clamping block (8.2), the left clamping block (8.3), and the right clamping block (8.4) are connected to the electric control system (6).

5. The numerically controlled rail milling machine of claim 1, **characterized in that**
the detection device (7) comprises: a left auxiliary measuring block (7.1), and a right auxiliary measuring block (7.2);
the left auxiliary measuring block (7.1) and the right auxiliary measuring block (7.2) are disposed on two sides of a lower end of a rail to be milled (12); and
control circuits of the left auxiliary measuring block (7.1) and the right auxiliary measuring block (7.2) are connected to the electric control system (6).
